# FASCICULE DE BREVET EUROPEEN

(11) **EP 1 083 727 B1**
(45) Date de publication et mention de la délivrance du brevet: **12.11.2003**
(21) Numéro de dépôt: 00402328.9
(22) Date de dépôt: 21.08.2000
(51) Int. Cl.: H04M 1/60, H04M 1/05

(54) **Dispositif d'acquisition et de restitution de son**
Vorrichtung zur Tonaufnahme und Tonwiedergabe
Sound pick-up and reproduction device

(30) Priorité: 07.09.1999 FR 9911321
(43) Date de publication de la demande: 14.03.2001
(73) Titulaire: SAGEM S.A., 75015 Paris (FR)
(72) Inventeur: Housni, Jamal M., 95000 Cergy (FR)
(74) Mandataire: Schmit, Christian Norbert Marie

(56) Documents cités:
- EP-A- 0 868 064
- WO-A-97/27721

## Description

L'invention a pour objet un dispositif d'acquisition et de restitution de son déporté. Le domaine de l'invention est la téléphonie mobile. Cependant, le domaine peut s'étendre à tous les dispositifs dont la finalité est d'acheminer un son qui, pour des raisons diverses, ne doit être entendue que par un seul utilisateur. Le but de l'invention est d'écarter le plus possible l'utilisateur d'un téléphone mobile de l'antenne de ce téléphone mobile. En effet, celle-ci émet des ondes radioélectriques d'une puissance relativement élevée susceptible d'interférer avec le cerveau de l'utilisateur du téléphone mobile. Un autre but de l'invention est de permettre à l'utilisateur d'un téléphone mobile de conserver l'usage de ses deux mains tout en utilisant son téléphone mobile pour recevoir ou émettre une communication.

Dans l'état de la technique, on connaît les kits mains libres qui permettent de suivre une conversation téléphonique sans pour autant tenir son téléphone portable dans une main, ni à proximité de son oreille. Une des solutions retenues pour la mise en oeuvre d'un kit mains libres, est d'utiliser un haut-parleur à diffusion amplifiée, et un microphone dont la sensibilité a été accrue. Les problèmes d'un tel dispositif sont, d'une part, la diffusion atmosphérique et amplifiée des informations de voix ou sonores reçues. En effet, toutes les personnes présentes à proximité du téléphone mobile, utilisant un tel dispositif, peuvent entendre la conversation. Cela peut s'avérer pratique lors d'une conférence, mais peut-être gênant dans le cadre d'une utilisation dans une voiture par exemple. En effet, si le conducteur du véhicule doit recevoir un appel, tous les passagers de ce véhicule pourront suivre la conversation et leur activité en sera perturbée.

D'autre part, il s'agit d'une écoute amplifiée. Pour obtenir ce résultat, on utilise un amplificateur de puissance qui va consommer plus de courant qu'un amplificateur standard utilisé en mode normal. Cela va donc réduire l'autonomie du téléphone mobile. Cela est gênant car l'autonomie du téléphone mobile est l'une de ses principales caractéristiques. De plus, dans un souci de conserver une autonomie correcte, l'amplificateur de puissance sera dimensionner au plus juste. Il risque donc de se produire des phénomènes de saturation qui vont distordre le son émis par le haut-parleur. A la consommation excessive et à la diffusion atmosphérique, viennent donc s'ajouter les problèmes de distorsion qui nuisent à la qualité du son.

Enfin, le fait d'utiliser un microphone ayant une sensibilité accrue, et plus ou moins omnidirectionnelle, fait que le microphone va prendre en compte tous les bruits environnant. Ainsi un interlocuteur distant devra subir, en plus de la conversation, tous les bruits qui entourent le téléphone mobile en mode mains libres.

On connaît aussi des systèmes mains libres qui se présentent sous la forme d'un casque, comme décrit dans les documents WO 97/27721 A et EP-A-0 868 064 A. Ces casques comportent des écouteurs qui viennent se loger à proximité ou dans les oreilles, et un micro que l'on présente devant la bouche de l'utilisateur. De tels systèmes sont donc très encombrants et visibles. Leur utilisation ne passe donc pas inaperçue, et est même impossible dans certains cas. En effet, si l'on envisage le cas du motard, par exemple un coursier, qui doit être fréquemment en liaison avec son centre de commande, il ne peut pas utiliser un tel système et doit donc systématiquement enlever son casque pour se servir de son téléphone mobile. Des systèmes plus discrets et plus compacts existent mais ils sont alors reliés par un fil, soit directement au téléphone mobile, soit à un dispositif qui permet de les connecter au téléphone mobile. Ce fil est visible, peu esthétique et constitue une entrave à la liberté de mouvement du porteur. Il peut de plus se prendre dans n'importe quel obstacle se situant sur le passage du porteur.

Un autre problème des téléphones mobiles existant, est la puissance, a priori excessive, des signaux radioélectriques émis par leur antenne. Cette puissance est jugée excessive car l'antenne se situe à proximité du cerveau de l'utilisateur. On craint donc qu'à plus ou moins long terme, la proximité de l'antenne et du cerveau puisse conduire à des lésions de ce dernier. On connaît des solutions pour pallier cet éventuel problème. Notamment celui de déplacer l'antenne du téléphone mobile vers le bas du téléphone mobile. Mais l'antenne reste encore trop proche.

L'utilisation d'un kit mains libres existant, pallie ce problème mais présente les problèmes évoqués au paragraphe précédent.

L'invention résout ces problèmes en établissant une liaison hertzienne de faible puissance entre le téléphone mobile et un dispositif, une oreillette, placé à proximité de l'oreille de l'utilisateur. L'oreillette comporte tous les moyens nécessaires à l'établissement de la connexion avec le téléphone mobile, sans qu'il soit nécessaire de lui adjoindre un quelconque dispositif. Elle est capable de transmettre à son porteur, et à lui seul, les sons reçus par le téléphone mobile, et de transmettre au téléphone mobile les sons émis par l'utilisateur. De dimension réduite, l'oreillette peut très bien être portée sous un casque par exemple. La distance maximum entre l'oreillette et le téléphone mobile auquel elle est connectée est de 1.5 m. Si l'on considère les lois d'atténuation des ondes électromagnétiques lors d'une propagation dans l'air, la puissance, des d'ondes électromagnétiques, reçue par le cerveau de l'utilisateur venant de l'antenne du téléphone mobile est donc considérablement réduite. L'invention réalise donc ainsi son double objectif d'éloigner l'antenne du téléphone mobile du cerveau de l'utilisateur, et de réaliser un kit mains libres discret aussi bien dans son apparence que dans son utilisation.

L'invention a donc pour objet un dispositif oreillette d'acquisition et de restitution de son déporté le dispositif étant autonome et pouvant être fixé à une oreille d'un utilisateur du dispositif, et comportant une branche de maintien et un bouchon d'oreille
- et comportant des moyens pour émettre et recevoir de manière radioélectrique des données correspondant à des informations audibles,
- la branche étant maintenue entre le crâne et le pavillon d'une oreille,
- le bouchon d'oreille et la branche de maintien étant en liaison mécanique élastique,
- le bouchon comportant un haut-parleur caractérisé en ce que:
   - la branche comporte des moyens pour acquérir des signaux de voix propagés à travers une mastoïde de l'utilisateur,
la branche comporte un accéléromètre en liaison élastique avec la branche,
le bouchon d'oreille est placé dans le conduit auditif externe.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une illustration d'un dispositif selon l'invention ;
- Figure 2 : une illustration des moyens de l'oreillette pour acquérir et restituer les sons ;
- Figure 3 : une illustration de l'intégration des moyens de l'oreillette ;
- Figure 4 : une illustration des moyens pour connecter un téléphone mobile à l'oreillette.

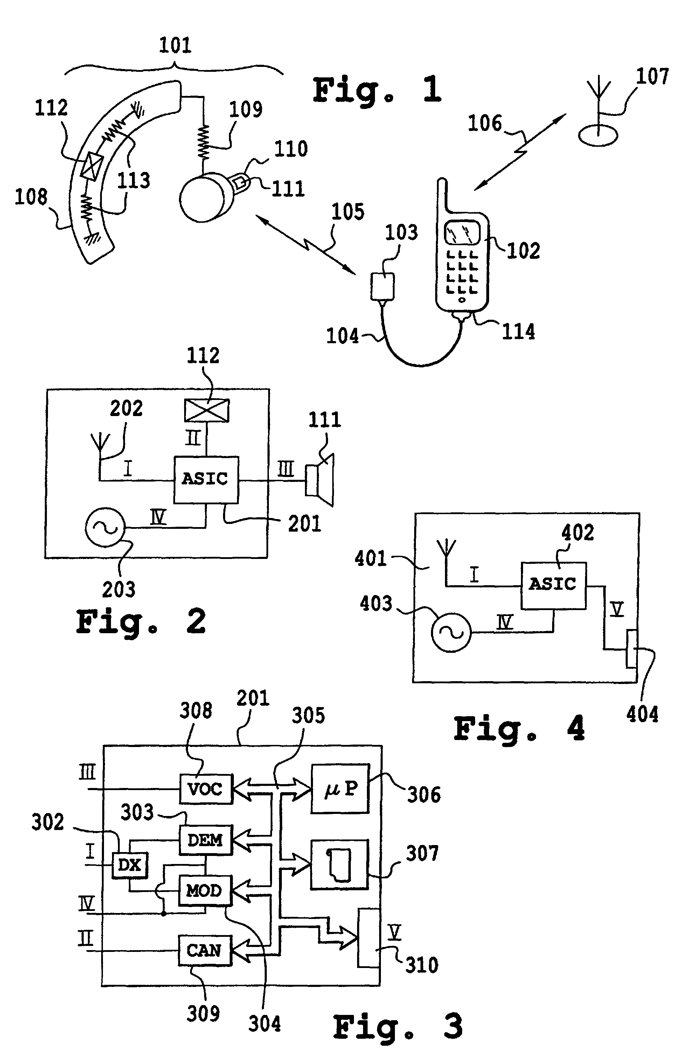

La figure 1 montre une oreillette 101 selon l'invention. La figure 1 montre aussi un téléphone portable 102 connecté à un dispositif 103 par une liaison 104 filaire. Dans une variante les moyens du dispositif 103 peuvent être compris dans le téléphone 102. Le dispositif 103 permet d'établir une connexion 105 hertzienne avec l'oreillette 101. D'autre part le téléphone 102 est connecté par une liaison hertzienne 106 à une station de base 107.

Lorsqu'elle est utilisée, l'oreillette 101 est fixée à l'oreille de son utilisateur grâce à une branche 108 qui se loge entre le pavillon de l'oreille et le crâne de l'utilisateur. La branche est alors à la fois maintenue en pression et en réaction à sa place. Il existe une liaison 109 mécanique élastique entre la branche 108 et un bouchon 110 d'oreille. Dans le cas décrit, le bouchon 110 vient se loger à l'intérieur de l'oreille de l'utilisateur. Une extrémité plus fine du bouchon 110 vient se loger dans le canal auditif de l'utilisateur.

La branche 108 comporte un accéléromètre 112. Lorsque l'oreillette 101 est en place, l'accéléromètre 112 est au contact d'une mastoïde de l'utilisateur. Lorsque l'utilisateur parle, cela provoque des vibrations qui se propagent entre autres dans sa boîte crânienne et dans la mastoïde. L'accéléromètre 112 est en mesure de capter ces vibrations. L'accéléromètre 112 est fixé à la branche 108 par l'intermédiaire d'une liaison 113 élastique. La liaison 113 élastique permet de découpler les vibrations reçues par la branche 108 des vibrations issues de la mastoïde sur laquelle est positionné l'accéléromètre 112. Pour la même raison on a établit la liaison 109 élastique entre la branche 108 et le bouchon 110 afin que les éventuelles vibrations émises par le bouchon 110 ne se propagent pas dans la branche 108. En effet le bouchon 110 comporte un haut-parleur 111 dont la destination est d'émettre des sons dans un canal auditif de l'utilisateur. Les sons sont des ondes. Afin d'éviter un effet larsen, il faut découpler au maximum le haut-parleur 111 et le microphone 112. Ainsi, les seules vibrations captées par l'accéléromètre 112 sont celles issues de la mastoïde et donc dues à la voix de l'utilisateur. Dans la pratique la liaison 109 peut être réalisé par un tube élastomère qui autorise les flexions et permet de faire passer des fils entre le bouchon 110 et la branche 108.

On établit aussi une liaison électrique entre la branche 108 et le bouchon 110. Cette liaison n'est pas représentée sur la figure 1. Cette liaison permet de ne pas dupliquer les moyens de liaison entre l'oreillette 101 et le téléphone mobile 102. En effet, l'oreillette 101 comporte des circuits permettant de traiter les données reçues soit par l'accéléromètre 112 soit par le téléphone mobile 102. Ces données sont alors soit transmises au téléphone 102 soit transmises au haut-parleur 111.

Dans une autre réalisation, la branche 108 est située sur une oreille de l'utilisateur, alors que le bouchon 110 est situé dans l'autre oreille du même utilisateur. Cela permet d'obtenir un découplage mécanique encore plus grand entre la branche 108 et le bouchon 110. Cependant, il faut maintenir une liaison électrique entre la branche 108 et le bouchon 110.

Lors d'une utilisation d'une oreillette 101 au cours d'une communication distante, le téléphone 102 est connecté avec un interlocuteur distant via la station de base 107 et la liaison 106. Le téléphone 102 reçoit alors des informations relatives aux paroles prononcées par l'interlocuteur distant. Dans l'exemple illustré par la figure 1 le téléphone 102 transmet alors ses informations au dispositif 103 via la liaison 104. Un dispositif 103 met alors ces informations en forme, en général il les module sous forme d'une onde radioélectrique, et les transmet à l'oreillette 101. L'oreillette 101 reçoit ces informations, c'est-à-dire l'onde radioélectrique, et la démodule de manière à obtenir les informations qui puissent être restituées dans l'oreille de l'utilisateur via le haut-parleur 101. Dans le même temps, les paroles prononcées par l'utilisateur de l'oreillette 101 sont captées, sous forme de vibrations, par l'accéléromètre 112. Des informations correspondant à ces paroles sont alors modulées et émises vers le dispositif 103 qui les transmet à son tour au téléphone 102 qui lui va les émettre vers l'interlocuteur distant. On établit ainsi une liaison full duplex entre deux interlocuteurs dont l'un au moins utilise l'oreillette 101. L'interlocuteur qui utilise une oreillette selon l'invention n'a pas besoin d'avoir son téléphone 102 mobile en main.

En effet, si l'utilisateur de l'oreillette 101 souhaite émettre un appel vers un numéro, il existe dans l'état de la technique des moyens de reconnaissance vocale permettant de composer ce numéro par l'intermédiaire du dispositif 101. Par exemple, l'utilisateur de l'oreillette 101 prononce un mot clé : appel ; le téléphone sait alors que les sons qui vont suivre correspondent soit à un numéro à appeler soit au nom d'une personne contenue dans la mémoire du téléphone mobile donc dont le téléphone mobile est capable de retrouver et de composer le numéro. Dans le cas d'un appel entrant, il existe des systèmes de décrochage automatique qui dispensent l'utilisateur de l'oreillette d'avoir à intervenir sur le téléphone 102 mobile. De même en fin de communication le téléphone mobile est capable de raccrocher tout seul.

La figure 2 montre les moyens mis en oeuvre par l'oreillette 101 pour l'acquisition et la restitution de son. La figure 2 montre le capteur 112 qui est connecté à un ASIC 201. Un ASIC est circuit spécialisé, les initiales signifient Application Specific Integrated Circuit ou Circuit Intégré à Application Spécialisée. Dans la pratique, il s'agit de circuits qui sont réalisés en vue de répondre à un besoin spécifique pour une application. Leur intérêt est qu'ils sont peu encombrant, mais leur principal inconvénient est qu'ils ne savent rien faire d'autre que ce pour quoi ils ont été conçus. C'est la solution qui a été retenue dans le cas présent car on dispose de très peu de place pour intégrer les moyens dont on a besoin. La figure 2 montre quatre entrées ou sorties de l'ASIC 201. L'entrée II est connectée à l'accéléromètre 112. Une sortie III est connectée à un haut-parleur 111. Une entrée-sortie I est connectée à une antenne 202. Cette antenne 202 est l'organe qui permet d'émettre et de recevoir les informations radioélectriques échangées entre l'oreillette 101 et le téléphone 102. Dans la pratique l'antenne 202 peut être située sur la surface extérieure de la branche 108. La figure 2 montre aussi un oscillateur 203 connecté à une entrée IV de l'ASIC 201.

L'oscillateur 203 sert d'une part à cadencer l'activité de l'ASIC 201, mais aussi à la modulation et démodulation des signaux reçus par l'antenne 202.

La figure 3 montre un détail des fonctionnalités réalisées par l'ASIC 201. La description qui suit présente l'ASIC comme un ensemble de blocs fonctionnels. Dans la pratique tous ces blocs sont confondus dans un seul et même circuit intégré. La figure 3 montre que l'entrée-sortie I de l'ASIC 201 est connectée à un duplexeur 302 qui est lui-même connecté à un démodulateur 303 et à un modulateur 304. Les signaux qui sont reçus par l'antenne 202 sont donc transmis au duplexeur qui à son tour les transmet au démodulateur 303. Le démodulateur 303 est d'autre part connecté à un bus 305. Le démodulateur 303 produit donc des données numériques correspondant aux informations reçues par l'antenne 202. Ces données numériques sont placées sur le bus 305 et mises à disposition d'un microprocesseur 306. Le microprocesseur 306 traite alors ces informations, sous le contrôle d'un programme contenu dans une mémoire 307 et transmet ces informations traitées à un vocodeur 308 toujours par le bus 305. Les éléments 306 à 308 sont connectés au bus 305. La sortie du vocodeur 308 correspond à la sortie 3IIIde l'ASIC 201. Ce sont donc les informations issues du vocodeur qui sont transmises au haut-parleur 111 et transformées en son reçu par une oreille de l'utilisateur de l'oreillette 101.

D'autre part, l'entrée III de l'ASIC 201 correspond à l'entrée d'un convertisseur analogique numérique 309. Le convertisseur 309 est connecté au bus 305 ce qui permet au microprocesseur 306 de lire les informations numériques produites par le convertisseur 309 à partir des informations analogiques que lui transmet l'accéléromètre 112. Les informations produites par le convertisseur 309 sont alors lues par le microprocesseur 306 sous le contrôle d'un programme contenu dans la mémoire 307 puis transmises par le bus 305 au modulateur 304. Le modulateur 304 module ces informations puis les transmet au duplexeur 302 qui va les envoyer vers l'antenne 202. Ces informations sont alors reçues par le téléphone 102.

La figure 3 montre aussi que l'ASIC 201 comporte une entrée-sortie V qui est un port 310 qui sert d'interface avec un connecteur. Le port 310 est lui aussi connecté au bus 305.

La figure 4 illustre les moyens dont a besoin le téléphone 102 pour pouvoir établir une communication avec l'oreillette 101. Les moyens décrits par la figure 4 peuvent soit être contenus dans le téléphone mobile 102, soit être contenus dans le dispositif 103. Dans la description qui précède, on a considéré que ces moyens étaient contenus dans le téléphone 102. On considère maintenant que ces moyens sont contenus dans le dispositif 103. La figure 4 montre une antenne 401 connectée à un ASIC 402 par une entrée I. La figure 4 montre aussi que l'ASIC 402 est connecté à un oscillateur 403 par une entrée IV et à un port 404 par une entrée-sortie V. L'ASIC 402 est identique à l'ASIC 201 si ce n'est que toutes ses fonctionnalités ne sont pas employées. Ainsi, l'ASIC 402 n'utilise pas le vocodeur et le convertisseur analogique numérique. En effet, le dispositif 103 n'a ni besoin de faire des acquisitions de son ni de restituer des sons. Le dispositif 103 n'a en charge que le dialogue entre l'oreillette 101 et le téléphone mobile 102. Ainsi le dispositif 103 reçoit par le port 404, de la part du téléphone mobile auquel il est connecté par la liaison 104 des informations de voix correspondant aux informations que le téléphone mobile 102 a reçues par l'intermédiaire de la liaison 106. L'ASIC 402 peut alors moduler ces informations et les transmettre à l'antenne 401 qui va les émettre à destination de l'antenne 202.

D'un autre côté, l'antenne 401 va recevoir les informations émises par l'antenne 202. Ces informations seront démodulées par l'ASIC 402 puis envoyées vers le port 404 pour être mises à disposition du téléphone mobile 102. Le téléphone mobile 102 va transmettre ces informations via la liaison 106.

Dans la pratique, les ASICs 201 et 402 peuvent être identiques. Cependant, lorsqu'il est employé dans le dispositif 103, toutes les entrées-sorties de l'ASIC 402 ne seront pas connectées. En effet, on a juste besoin, dans le dispositif 103 des entrées-sorties I, IV et V. Le fait d'employer le même ASIC est intéressant, puisque cela réduit les coûts de développement et de production. En effet, en produisant en plus grand nombre un même produit, on réalise des économies d'échelle. Cependant, il est tout à fait envisageable d'utiliser deux ASIC différents pour l'oreillette 101 et le dispositif 103. Dans ce cas, l'ASIC 402 ne comporterait ni vocodeur ni convertisseur analogique numérique. De même, l'ASIC 201 ne comporterait pas de port.

Dans le cas où les moyens décrits par la figure 2 seraient directement compris dans le téléphone mobile 102, l'ASIC 201 n'aurait alors plus besoin du port 310, puisque l'ASIC 201 pourrait lire directement les informations reçues par le téléphone mobile 202 via la connexion 106 sur le bus 305 qui ferait alors partie du téléphone mobile 102.

Dans la pratique, la connexion entre le dispositif 103 et l'oreillette s'établissent soit à la fréquence de 2.45 GHz, soit à la fréquence de 5.80 GHz. Pour s'établir, elle nécessite une bande de 5 KHz. De plus, la portée des missions est très faible, à peu près 1.5 m c'est-à-dire de mW à 0.5 mW. Cela n'a rien de comparable avec la puissance du téléphone mobile 102 qui est à peu près de 1 W. L'objectif de diminuer l'exposition du cerveau de l'utilisateur aux ondes électromagnétiques est donc bien atteint.

La faible portée des émetteurs de l'oreillette 101 ou du dispositif 103, permet de limiter les risques d'interférences avec d'autres appareils du même type. Cependant, pour plus de sûreté on apparie un dispositif du type 103 avec une oreillette du type 101. Ainsi dans les communications qu'ils échangent, il existe des identifiants de l'émetteur du message ainsi que du destinataire. C'est-à-dire une oreillette du type 101 sait quand un message lui est adressé et sait à qui elle doit adresser ces messages, il en va de même pour un dispositif du type 103.

Les moyens mis en oeuvre par le téléphone 102 pour communiquer avec le dispositif 103, par exemple, via le port 404 n'ont pas été décrits. En effet il s'agit de moyens similaires à ceux mis en oeuvre par le même téléphone mobile 102 lorsque celui-ci est utilisé comme modem et connecté par son port 114 à un ordinateur par exemple.

Les figures ne font pas apparaître les alimentation électrique de l'oreillette 101 et du boîtier 103. C'est appareils en sont pourtant doté et les alimentations n'ont pas été représenté dans un soucis de clarté.

## Revendications

1. Dispositif oreillette (101) d'acquisition et de restitution de son déporté le dispositif étant autonome et pouvant être fixé à une oreille d'un utilisateur du dispositif, et comportant une branche (108) de maintien et un bouchon (110) d'oreille
- et comportant des moyens (201-203) pour émettre et recevoir de manière radioélectrique des données correspondant à des informations audibles,
- la branche étant maintenue entre le crâne et le pavillon d'une oreille,
- le bouchon d'oreille et la branche de maintien étant en liaison (109) mécanique élastique,
- le bouchon comportant un haut-parleur (111) **caractérisé en ce que**:
- la branche comporte des moyens (112, 113) pour acquérir des signaux de voix propagés à travers une mastoïde de l'utilisateur,
la branche comporte un accéléromètre (112) en liaison élastique avec la branche,
le bouchon d'oreille est placé dans le conduit auditif externe.

2. Dispositif selon la revendication 1, **caractérisé en ce que** le bouchon et la branche sont connectés électriquement.

3. Dispositif selon l'une des revendications 1 ou 2, **caractérisé en ce que** la branche de maintien est fixée à une oreille d'un utilisateur et que le bouchon d'oreille est dans l'autre oreille de l'utilisateur.

4. Dispositif selon l'une des revendications 1 à 3, **caractérisé en ce que** l'accéléromètre est en contact avec une mastoïde de l'utilisateur sur l'oreille duquel le dispositif est fixé.

5. Dispositif selon l'une des revendications 1 à 4, **caractérisé en ce que** la branche comporte les moyens d'émission réception radioélectrique, ces moyens comportent un circuit (201) spécialisé, une antenne (202) et un oscillateur (203).

6. Utilisation d'un dispositif selon l'une des revendications 1 à 5, **caractérisé en ce que** le dispositif établit une connexion avec un boîtier (103) émetteur récepteur connecté (105) de manière hertzienne au dispositif oreillette et de manière filaire (104) à un téléphone (102) mobile.

7. Utilisation d'un dispositif des revendications 1 à 6, **caractérisé en ce que** le dispositif établit une connexion avec un téléphone mobile qui comporte des moyens (401-404) de se connecter de manière hertzienne au dispositif oreillette.

## Patentansprüche

1. Hörvorrichtung (101) zum Aufnehmen und Wiedergeben von umgeleitetem Schall, die autonom ist und an einem Ohr eines Anwenders der Vorrichtung befestigt werden kann und umfasst: einen Haltearm (108) und einen Ohrenstöpsel (110), Einrichtungen (201 - 203) für elektromagnetisches Ausstrahlen und Empfangen von Daten, die akustischen Informationen entsprechen, wobei
der Arm zwischen dem Schädel und der Ohrmuschel gehalten wird,
der Ohrenstöpsel und der Haltearm elastisch (109) miteinander verbunden sind,
der Stöpsel einen Lautsprecher (111) umfasst,
**dadurch gekennzeichnet, dass**
der Arm Einrichtungen (112, 113) für das Auffangen von Sprachsignalen umfasst, die sich über einen Warzenfortsatz des Schläfenbeins des Anwenders ausbreiten,
der Arm einen Beschleunigungssensor (112) umfasst, der elastisch mit dem Arm verbunden ist, und
der Ohrenstöpsel in dem äußeren Gehörgang angeordnet ist.

2. Vorrichtung nach Anspruch 1,
**dadurch gekennzeichnet, dass**
der Stöpsel und der Arm elektrisch miteinander verbunden sind.

3. Vorrichtung nach Anspruch 1 oder 2,
**dadurch gekennzeichnet, dass**
der Haltearm an einem Ohr eines Anwenders befestigt ist und der Ohrenstöpsel sich in dem anderen Ohr des Anwenders befindet.

4. Vorrichtung nach einem der Ansprüche 1 bis 3,
**dadurch gekennzeichnet, dass**
der Beschleunigungssensor mit einem Warzenfortsatz des Schläfenbeins des Anwenders über das Ohr Kontakt hat, an dem die Vorrichtung befestigt ist.

5. Vorrichtung nach einem der Ansprüche 1 bis 4,
**dadurch gekennzeichnet, dass**
der Arm elektromagnetische Sende- und Empfangseinrichtungen umfasst, wobei diese Einrichtungen einen speziellen Schaltkreis (201), eine Antenne (202) und einen Oszillator (203) umfassen.

6. Verwendung einer Vorrichtung nach einem der Ansprüche 1 bis 5,
**dadurch gekennzeichnet, dass**
die Vorrichtung eine Verbindung zu einem Sendeempfangsgerät (103) herstellt, das über Funk mit der Hörvorrichtung und über eine Drahtverbindung (104) mit einem Mobiltelephon (102) verbunden ist.

7. Verwendung einer Vorrichtung nach einem der Ansprüche 1 bis 6,
**dadurch gekennzeichnet, dass**
die Vorrichtung eine Verbindung zu einem Mobiltelephon herstellt, das Einrichtungen (401 - 404) umfasst, um sich über Funk mit der Hörvorrichtung zu verbinden.

## Claims

1. Ear-piece device (101) for picking up and reproducing deported sound, the device being autonomous and able to be fixed to an ear of a user of the device and including a retaining arm (108) and an ear-plug (110) and including means (201 - 203) for transmitting and receiving radioelectrically data corresponding to audible information, the arm being retained between the skull and the auricle of an ear and the ear-plug and the retaining arm being in elastic mechanical connection (109), the ear-plug including a loud-speaker (111), ***characterised by** the fact that*:
- the arm includes means (112, 113) for picking up voice signals propagated through a mastoid of the user,
- the arm includes an accelerometer (112) in elastic connection with the arm,
- the ear-plug is placed in the external auditory canal.

2. Device as described in claim 1, ***characterised by** the fact that* the plug and the arm are electrically connected.

3. Device as described in one of claims 1 or 2, ***characterised by** the fact that* the retaining arm is fixed to one ear of a user and that the ear-plug is in the other ear of the user.

4. Device as described in one of claims 1 to 3, ***characterised by** the fact that* the accelerometer is in contact with a mastoid of the user on whose ear the device is fixed.

5. Device as described in one of claims 1 to 4, ***characterised by** the fact that* the arm includes the radioelectric transceiver means, these means include a specialised circuit (201), an antenna (202) and an oscillator (203).

6. Use of a device as described in one of claims 1 to 5, ***characterised by** the fact that* the device establishes a connection with a transceiver unit (103) connected (105) in Hertzian manner to the ear-piece device and in wired manner (104) to a mobile telephone (102).

7. Use of a device of claims 1 to 6, ***characterised by** the fact that* the device establishes a connection with a mobile telephone which includes means (401 - 404) of being connected in Hertzian manner to the ear-piece device.
